# EUROPEAN PATENT APPLICATION

(11) **EP 4 752 965 A1**
(43) Date of publication of application: **03.06.2026**
(21) Application number: 25215257.4
(22) Date of filing: 12.11.2025
(51) Int. Cl.: H01M 4/139, H01M 10/0525, H01M 4/13, H01M 4/04, H01M 4/58, H01M 4/62

(54) **MANUFACTURING METHOD OF ELECTRODE SHEET**

(30) Priority: 02.12.2024 JP 2024209521
(71) Applicant: Toyota Jidosha Kabushiki Kaisha, Toyota-shi, Aichi-ken 471-8571 (JP)
(72) Inventor: SATO, Tomohiro, Toyota-shi, 471-8571 (JP); IKEDA, Takenori, Toyota-shi, 471-8571 (JP)
(74) Representative: Kuhnen & Wacker Patent- und Rechtsanwaltsbüro PartG mbB

(57) **Abstract**

A method for manufacturing an electrode sheet (2) may include preparing a binder mixture containing a fibrillated first binder by mixing a fibrillatable first binder and inactive material particles which are non-fibrillatable particles; and preparing an electrode composite mixture containing the binder mixture and active material particles.

## Description

### CROSS REFERENCE TO RELATED APPLICATION

This application claims priority to Japanese Patent Application No. 2024-209521 filed on December 2, 2024. The entire content of the priority application is incorporated herein by reference.

### TECHNICAL FIELD

The art disclosed herein relates to a manufacturing method of an electrode sheet.

### BACKGROUND ART

A dry process is known as a manufacturing method of an electrode sheet for secondary battery (Japanese Patent Application Publication No. 2024-37911). In this process, a dry bulk active mixture is formed by mixing a dry particulate non-fibrillatable binder and an active material, a dry-structure binder mixture is formed by high-shear mixing of a dry fibrillatable binder (which may termed "the fibrillatable binder" hereinafter) and an active material, a dry electrode composite mixture is formed by mixing the above mixtures, and then a dry freestanding electrode sheet is manufactured from the electrode composite mixture.

Generally, high-shear mixing of a dry fibrillatable binder and active material particles causes fibrillation of the dry fibrillatable binder, resulting in formation of a dry binder mixture which contributes to self-support of an electrode sheet. However, it has been found that such a shear force may cause damage such as fragmentation and surface delamination of the active material particles. This damage may lead to, for example, poor resistance of the electrode sheet.

The disclosure herein provides a technology that allows for manufacture of an electrode sheet while reducing or avoiding damage to active material particles.

### SUMMARY

The inventors have found that a fibrillatable first binder can be fibrillated using non-fibrillatable particles, which are inactive material particles, as a fibrillation medium or an additive. The disclosure herein is based on this finding.

The disclosure herein relates to a method of manufacturing an electrode sheet. The method may comprise preparing a binder mixture containing a fibrillated first binder by mixing a fibrillatable first binder and inactive material particles which are non-fibrillatable particles, and preparing an electrode composite mixture containing the binder mixture and active material particles.

According to this manufacturing method, the first binder is fibrillated in the presence of the non-fibrillatable particles, which are inactive material particles, and the binder mixture is thereby obtained. After this, the electrode composite mixture is prepared, which contains the binder mixture containing fibrillated first binder and active material particles. Thus, the active material particles are not subjected to the shear force applied to fibrillate the first binder, which reduces or avoids damage to the active material particles. Thereby, poor resistance of a resulting electrode sheet that is caused by damages to the active material particles can be avoided.

### BRIEF DESCRIPTION OF DRAWINGS

FIG. 1 is a diagram illustrating an example of electrode sheet manufacturing scheme according to a method of manufacturing an electrode sheet.
FIG. 2 is a diagram illustrating an example of secondary battery comprising an electrode sheet as a positive electrode.
FIG. 3 is a diagram illustrating an evaluation result of powder resistance value of an electrode composite mixture prepared according to an embodiment.

### DETAILED DESCRIPTION

A method of manufacturing an electrode sheet disclosed herein (which may be simply termed "the disclosed manufacturing method" hereinafter) can comprise preparing the above binder mixture and preparing the above electrode composite mixture. Further, the disclosed manufacturing method can include the aspects below.

In one aspect of the present teachings, the preparing the binder mixture may be performed at a temperature equal to or lower than a melting point of a material contained in the non-fibrillated particles. This allows the non-fibrillatable particles to maintain their particle shape in this step, which allows for efficient application of shear force to the first binder.

In one aspect of the present teachings, the active material particles may each comprise a core containing an active material and a coating layer covering at least a portion of the core. This reduces or avoids application of a high shear force to the coating layers, which allows the function of coating layers to be maintained. In the above aspect, the coating layer may have electron conductivity. By maintaining the function of coating layers having electron conductivity, poor resistance of a resulting electrode sheet can be efficiently suppressed.

In one aspect of the present teachings, the non-fibrillatable particles may include a component of the electrode sheet. By using the non-fibrillatable particles, which are inactive material particles and include a component of the electrode sheet, an electrode sheet can be efficiently manufactured, while avoiding damage to the active material particles. In one aspect of the present teachings, the non-fibrillatable particles may include a second binder. This facilitates fibrillation of the first binder and efficient preparation of the binder mixture.

In one aspect of the present teachings, an average particle diameter (D₅₀) of the non-fibrillatable particles may be 7µm or more. When the average particle diameter of the non-fibrillatable particles is 7µm or more, the first binder can be mixed at a work amount efficient to fibrillate the first binder and a shear force for fibrillation can be easily applied to the first binder.

In one aspect of the present teachings, the preparing the binder mixture may include mixing at a first work amount, and the preparing the electrode composite mixture may include mixing at a second work amount lower than the first work amount. This ensures a reduction or avoidance of damage to the active material particles.

In one aspect of the present teachings, the preparing the binder mixture and the preparing the electrode composite mixture may be performed by a dry process. This allows for manufacture of an electrode sheet without process and operations involving a solvent.

In one aspect of the present teachings, the method may further comprise forming the electrode sheet using the electrode composite mixture.

The disclosure herein also provides a method for manufacturing an electrode composite mixture. This method may comprise mixing a fibrillatable first binder and inactive material particles which are non-fibrillatable particles to prepare a binder mixture containing a fibrillated first binder. The disclosure herein also provides a method for manufacturing an electrode composite mixture. This method may comprise mixing a fibrillatable first binder and inactive material particles which are non-fibrillatable particles to prepare a binder mixture containing a fibrillated first binder; and preparing an electrode composite mixture containing the binder mixture and active material particles.

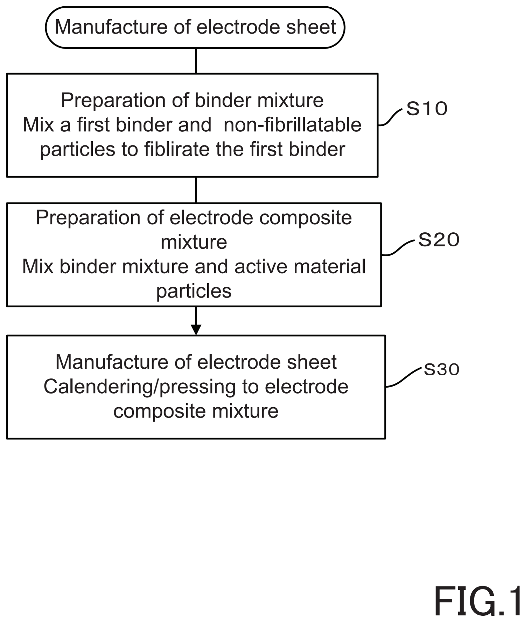

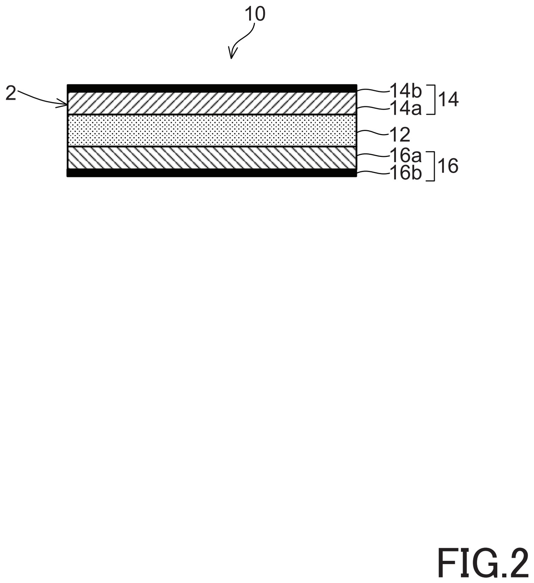

Hereinafter, the disclosed manufacturing method is described with reference to the drawings when appropriate. FIG. 1 illustrates an outline of a scheme according to the disclosed manufacturing method, and FIG. 2 illustrates an example of secondary battery comprising an electrode sheet manufactured by the disclosed manufacturing method. In the disclosure herein, the electrode sheet is used, for example, to form a positive electrode or a negative electrode of a lithium-ion secondary battery. Further, in the disclosure herein, the electrode sheet is, for example, a freestanding electrode sheet. In the disclosure herein, substances or materials expressed with the term "particles", such as "fibrillatable particles", "non-fibrillatable particles", "active material particles", etc., all include the concept of powder comprising a plurality of particles.

### Method of Manufacturing Electrode Sheet

Hereinafter, a method of manufacturing an electrode sheet (positive electrode sheet) 2 for a positive electrode 14 of a lithium-ion secondary battery 10 (which may be simply termed "the secondary battery 10" hereinafter) is described as an example. Various aspects of the disclosed manufacturing method are applicable to both the electrode sheet 2 for positive electrode and an electrode sheet for negative electrode, unless otherwise stated.

FIG. 2 illustrates the secondary battery 10. As illustrated in FIG. 2, the secondary battery 10 comprises the positive electrode 14 and a negative electrode 16 disposed on opposing sides of a separator 12. The separator 12 is formed of a well-known material such as a polyolefin-based microporous film having microscopic pores. The separator 12 is impregnated with a liquid electrolyte containing lithium salt such as lithium hexafluorophosphate, using an organic solvent, such as ethylene carbonate (EC), dimethyl carbonate (DMC), or diethyl carbonate (DEC), as a medium. The separator 12 may be a solid electrolyte layer. The positive electrode 14 comprises a positive electrode composite layer 14a which is the electrode sheet 2 and a positive electrode current collecting layer 14b. The negative electrode 16 comprises a negative electrode composite layer 16a and a negative electrode current collecting layer 16b. A suitable well-known material may be used for each of the positive electrode current collecting layer 14b and the negative electrode current collecting layer 16b.

### Step of Preparing Binder Mixture

As illustrated in FIG. 1, the disclosed manufacturing method comprises a step of preparing a binder mixture containing a fibrillated first binder by mixing a fibrillatable first binder and non-fibrillatable particles, which are inactive material particles (S10).

### First Binder

The fibrillatable first binder is fiberized (fibrillated) by a shear force being applied thereto. For example, binder fibers are clumped in the first binder, and the first binder is fiberized (fibrillated) when this clump is unraveled by a constant shear force. The particle shape of the first binder is not particularly limited. The first binder is a binder well known as an electrode binder for secondary battery, and any suitable binder having a fibrillatable structure can be used as the first binder.

Examples of the first binder include, but not limited to, for example, polytetrafluoroethylene (PTFE), polyolefin, polyalkylene, polyether, styrene-butadiene, polysiloxane, copolymers of polysiloxane, branched polyether, polyvinyl ether, and copolymers thereof. An example of the first binder may be a cellulose containing carboxyalkyl cellulose such as carboxymethyl cellulose (CMC). Further, examples of the first binder include, as the polyolefin, polyethylene (PE), polypropylene (PP), polyvinylidene difluoride (PVDF), and copolymers thereof. Moreover, examples of the first binder include such as polymers polyvinylene chloride, polyphenylene oxides (PPO), block copolymers containing polyethylene oxides (PEO) and PPO, and polymers such as polydimethylsiloxane (PDMS). One or a combination of two or more of the above listed materials may be used as the first binder. For example, the first binder is one or a combination of two or more selected from PTEF, PVDF, and CMC, PTFE and/or PVDF, or PTFE.

The average particle diameter of the first binder is, for example, 5 µm or more and 50 µm or less, although it is not limited thereto. This range facilitates fibrillation of the first binder in the presence of the non-fibrillatable particles in the preparation step. The average particle diameter may be, for example, 10 µm or more and 40 µm or less, 15 µm or more and 35 µm or less, or 20 µm or more and 30 µm or less. The average particle diameter of the first binder can be measured as a particle diameter of integrated value 50% (D₅₀) in a volume-based particle size distribution measured by laser diffractometry and scattering method.

### Non-Fibrillatable Particles

The non-fibrillatable particles are inactive material particles that are not fibrillatable. The inactive material particles herein refer to particles that do not function as active particles in the electrode sheet 2 to be manufactured. In case the electrode sheet 2 is an electrode sheet for positive electrode, active material particles are positive-electrode active material particles to be listed below. Thus, the inactive material particles are particles other than such positive-electrode active materials. In case the electrode sheet 2 is an electrode sheet for negative electrode, the inactive material particles are particles other than negative-electrode active material particles to be listed below.

The non-fibrillatable particles are not fibrillatable. Suitable particles having a structure that is not fibrillatable or hard to be fibrillated by a shear force may be used as the non-fibrillatable particles.

It may be preferable that the non-fibrillatable particles comprise a component of the electrode sheet 2 because if so, a binder mixture can be used as is in a step of preparing an electrode composite mixture. Examples of the component include, for example, another binder other than the first binder and a conductive additive. The other binder is an example of second binder in the disclosure herein.

Examples of the other binder include non-fibrillatable binders that are the same kind as or different kinds from the binder used as the first binder. Even when the other binder is a polymer of the same kind as the first binder, the other binder can be used as non-fibrillatable particles since it is not fibrillatable. Using the other binder as the non-fibrillatable particles facilitates application of a shear force to the first binder and efficiently forms a binder mixture that contains binders of the same kind but in different shapes or two or more kinds of binders.

Examples of the other binder described above include various binders that can be used as the first binder described above. Further, examples of the other binder other than the first binder include celluloses or cellulose derivatives (except for CMC). Examples of the cellulose derivatives include, for example, cellulosic esters such as cellulose acetate, cellulose ethers such as methylcellulose, ethylcellulose, hydroxypropylcellulose (HPC), and hydroxyethyl cellulose (HEC), and carboxyalkyl celluloses such as cellulose nitrate, carboxyethyl cellulose, carboxymethyl cellulose, and carboxyisopropyl cellulose. The celluloses may be salts. Bases of the salts may be selected from sodium, ammonium, and lithium. The other binder used as the non-fibrillatable particles may be one or a combination of two or more of the materials listed above for the other binder. The other binder is, for example, CMC and/or PVDF or PVDF.

The conductive additive may be any suitable material that can be used as a conductive additive in the electrode sheet 2, although it is not limited thereto. Examples of the conductive additive include: black lead such as natural graphite and artificial graphite, carbon black such as acetylene black, Ketjenblack, channel black, furnace black, lamp black, and summer black; conductive fibers such as carbon fibers and metal fibers; carbon materials such as graphene and carbon nanotubes; fluorocarbons; metal powder such as aluminum powder and nickel powder; conductive whiskers such as zinc oxides and potassium titanate; conductive metal oxides such as titanium oxide; and conductive materials such as polyphenylene derivatives. One or a combination of two or more of the materials listed above may be used as a conductive additive used as the non-fibrillatable particles.

It may be preferable that the non-fibrillatable particles have the average particle diameter of 7 µm or more. This is because, when the average particle diameter is 7 µm or more, the first binder can be easily mixed at a work amount that can apply a shear force for the first binder to fibrillate. According to the inventors, in case the average particle diameter of the non-fibrillatable particles is 6 µm or less, the mixing can be conducted only at approximately 0.7 J per 100 g of the mixing materials at maximum, which does not provide application of enough shear force to the first binder. In contrast, in case the average particle diameter of the non-fibrillatable particles is 7 µm or more and 20 µm or less, the mixing can be conducted at approximately 1 J or more, up to 8.2 J per 100 g of the mixing materials, which facilitates application of enough shear force for the first binder to fibrillate. In the disclosure herein, the total work amount for the mixing can be obtained as the integrated amount of power obtained by integrating the instantaneous power over the mixing time. For example, a work amount in the mixing (per 100 g) can be obtained as the integrated amount of power per 100 g of the mixing materials.

The average particle diameter of the non-fibrillatable particles may be, for example, 8 µm or more, 9 µm or more, 10 µm or more, 11 µm or more, 12 µm or more, or 14 µm or more. The average particle diameter may be, for example, 30 µm or less, 25 µm or less, 20 µm or less, 18 µm or less, 16 µm or less, 15 µm or less, 14 µm or less, 12 µm or less, or 10 µm or less. The average particle diameter of the non-fibrillatable particles may be in a range of 10 µm or more to 30 µm or less or in a range of 10 µm or more to 20 µm or less. The average particle diameter of the non-fibrillatable particles may be larger than the average particle diameter of the first binder. The average particle diameter of the non-fibrillatable particles can be measured as a particle diameter of integrated value 50% (D₅₀) in a volume-based particle size distribution measured by laser diffractometry and scattering method.

Mixing materials mixed to form a binder mixture may include, in addition to the first binder and the non-fibrillatable particles, another binder and/or another additive that do/does not constitute the non-fibrillatable particles, if needed.

It may be preferable that in view of dispersibility of the fibrillated first binder, the content of the first binder in the mixing materials is 90 mass% or less relative to the total mass of the mixing materials. For example, the content of the first binder may be 85 mass% or less or 80 mass% or less relative to the total mass of the mixing materials. Further, the content of the first binder may be, for example, 70 mass% or more, 75 mass% or more, or 80 mass% or more relative to the total mass of the mixing materials. The total mass of the non-fibrillatable particles in the mixing materials may be, for example, 10 mass% or more, 15 mass% or more, 20 mass% or more, 30 mass% or less, 25 mass% or less, or 20 mass% or less.

In this step, the first binder is mixed with the non-fibrillatable particles (shear mixing) to fibrillate the first binder. For example, the mixing may be conducted such that at least a part of the first binder can be fibrillated. Since the fibrillation of the first binder itself is well known, those skilled in the art can appropriately mix the first binder such that it can fibrillate, depending on the kind of the first binder and/or mixing method used. The degree of fibrillation of the first binder in this step is not particularly limited, but for example, the first binder may be fibrillated to the degree that the freestanding electrode sheet 2 can be formed by the first binder and the non-fibrillatable particles.

Such shear mixing is conducted, for example, at a work amount of 1 J or more per 100g of the mixing materials, although this need not always be the case. For example, the work amount may be 2J or more, 3 J or more, 4 J or more, 5 J or more, 6 J or more, or 8 J or more. The upper limit of the work amount may be, for example, 15 J or less, 14 J or less, 12 J or less, 10J or less, or 9 J or less, although it is not limited thereto. These work amounts facilitate application of a shear force for fibrillation to for the first binder. These work amounts are examples of first work amount disclosed herein. Specifically, these work amounts are achieved by selecting a type of a suitable mixing device and adjusting the rotational speed and time of the mixing device.

It may be preferable that the mixing in this step is conducted at a temperature that facilitates the fibrillation of the first binder. In case the first binder is PTFE, the mixing is conducted, for example, at 40 °C. A temperature for the shear mixing can be determined appropriately by fibrillating each first binder used.

It may be preferable that the mixing in this step is conducted at a temperature that is equal to or lower than the melting point of the material of the non-fibrillatable particles. This facilitates application of a shear force to the first binder. Further, since the non-fibrillatable particles are used as a media or an additive to fibrillate the first binder, the non-fibrillatable particles can be maintained. In case the non-fibrillatable particles are PVDF, which is different from the first binder, the mixing is conducted at a temperature equal to or lower than 177 °C since the melting point of PVDF is 177 °C.

In an example, in view of the kind of binder used for the secondary battery, the mixing in this step is conducted, for example, at a temperature of 40 °C or higher and 150 °C or lower, 50 °C or higher and 140 °C or lower, 60 °C or higher and 140 °C or lower, 80 °C or higher and 120 °C or lower, or 90 °C or higher and 110 °C or lower. Thereby, the first binder can be efficiently fibrillated.

For example, a suitable well-known mixing device that can be used for shear mixing may be used for the mixing in this step. Examples of such a mixing device include, for example, various kneaders, such as pressure kneaders, comprising a roll, a rotor, a paddle, a blade, a gear, or a screw as a rotating element, Banbury mixers, Henschel mixers, twin-screw extruders, and various mills such as jet mills, roller mills, and hummer mills. For example, in case a kneader is used, the mixing is conducted, for example, for 10 to 1200 seconds, generally for 20 to 40 seconds.

In this step, a binder mixture containing the fibrillated first binder can be formed. This resulting binder mixture can have a composition associated with the compositions of the mixing materials.

### Step of Preparing Electrode Composite Mixture

Next, a step of preparing an electrode composite mixture containing the binder mixture and active material particles (S20) is performed. In this step, the binder mixture and active material particles are mixed together to prepare the electrode composite mixture.

### Active Material Particles

For the electrode sheet 2 used as a positive electrode sheet, any active material particles well known as positive-electrode active material can be used as the active material particles. Examples of the positive-electrode active material include, but are not limited to, for example, metal oxides, metal sulfides, and lithium metal oxides. Typical examples include layered rock-salt type lithium-containing oxides and olivine-type lithium iron phosphates. Examples of the layered rock-salt type lithium-containing oxides include NCM oxides that can be expressed in a general expression LiNiₓCo_{y}Mn_{z}O₂ (x+y+z=1) such as LiCoO₂(LCO) and Li(Ni_{0.6}Co_{0.2}Mn_{0.2})O₂, and NCA oxides that can be expressed in a general expression LiNiₐCo_{b}Al_{c}O₂ (a+b+c=1) such as LiNi_{0.8}Co_{0.15}Al_{0.05}O₂. Examples of the olivine-type lithium iron phosphates include lithium iron phosphate (LiFePO₄ (LFP)), lithium iron manganese phosphate (LiMn_{(1-d)}F_{d}PO₄ (LMFP)), and lithium manganese phosphate (LiMnPO₄ (LMP)). One or a combination of two or more of the above listed materials may be used as the active material particles for positive electrode sheet.

For the electrode sheet 2 used as a negative electrode sheet, any active material particles well known as negative-electrode active material can be used. Examples of the negative-electrode active material include, but are not limited to, for example, carbon-based materials and metal-based materials. Examples of the carbon-based material include, for example, natural or artificial black lead (graphite), graphene, acetylene black, carbon fibers, and carbon nanotubes. Further, examples of the metal-based materials include tin, silicon, titanium, metallic nitrides, lithium, and lithium alloys. Examples of the metal-based materials also include SiC and lithium titanium composite oxides. One or a combination of two or more of the above listed materials can be used as the active material particles for negative electrode sheet.

The active material particles may each comprise a core containing the active material and a coating layer covering at least a portion of the core, although this need not always be the case. Especially the coating layers of these active material particles are susceptible to damage due to shear mixing, which may result in loss of the function of coating layers. Thus, it is effective to adopt the disclosed manufacturing method to manufacture a positive-electrode electrode sheet comprising such positive-electrode active material particles. Any well-known active material particles of such type can be used as the active material particles. For example, examples of positive-electrode active material particles include particles of olivine-type lithium iron phosphate compounds (LFP, LMP, LMFP) comprising carbon coating layers with excellent electron conductivity on their surfaces. Additionally, nanosized metal particles may be supported thereon. Examples of negative-electrode active material particles include, for example, graphite particles comprising carbon coating layers of pyrolyzed carbon or crystalline carbon on their surfaces.

A ratio of the coating layer to core particle is not particularly limited and determined as desired. For example, it may be preferable that the ratio is 0.01 mass% or more and 1.20 mass% or less. For example, the ratio is 0.10 mass% or more and 0.30 mass% or less. The thickness of the coating layers may be, for example, 0.1 nm or more and 10 nm or less, or 0.5 nm or more and 3 nm or less, although it is not particularly limited thereto.

The average particle diameter of the active material particles may be, for example, 2 µm or more and 50 µm or less, although it is not particularly limited thereto. In the disclosed manufacturing method, the active material particles are not used as a medium to fibrillate the first binder, and thus their average particle diameter is not limited to diameter ranges that allow the particles to effectively function as a fibrillation medium. For example, the average particle diameter of the active material particles may be smaller than the average particle diameters of the first binder and the non-fibrillatable particles. The average particle diameter of the active material particles may be, for example, 2 µm or more and 20 µm or less, 3 µm or more and 15 µm or less, or 5 µm or more and 10 µm or less. The average particle diameter of the active material particles can be measured as a particle diameter of integrated value 50% (D₅₀) in a volume-based particle size distribution measured by laser diffractometry and scattering method.

Mixing materials mixed in this step for an electrode composite can include, in addition to the binder mixture prepared in the previous step and the active material particles, another binder and a conductive additive, if
needed. The same described above in connection with the other binder and conductive additive used in the previous step is applied to the additional binder and conductive additive used in this step. It may be preferable that the total amount of binder(s) is 2 mass% or more and 20 mass% or less relative to the total amount of the mixing materials for an electrode composite. For example, the total amount of binder(s) may be 2 mass% or more and 10 mass% or less, or 2 mass% or more and 8 mass% or less relative to the total amount of the mixing materials for an electrode composite.

In this step, the binder mixture and the active material particles may be mixed together at a work amount lower than the work amount used in the mixing (shear mixing) in the previous preparation step for the binder mixture, which reduces or avoids damage to the active material particles. This is because this step does not require shear mixing to fibrillate the first binder since an effective amount of the first binder has been already fibrillated in the previous preparation step for the binder mixture. The mixing in this step is conducted, for example, at a work amount of less than 1 J per 100 g of the mixing materials, although it is not limited thereto. For example, the work amount may be 0.9 J or less, 0.8 J or less, 0.7 J or less, 0.6 J or less, 0.5 J or less, or 0.4 J or less. These work amounts are examples of "second work amount" disclosed herein. Specifically, these work amounts are achieved by selecting a type of a mixing device and adjusting the rotational speed and time of the mixing device.

For the mixing in this step, a suitable mixing device that is capable of simple mixing, among the mixing devices listed above, can be used, although this need not always be the case. For example, in case a mixier is used, the mixing is conducted, for example, for 10 to 1200 seconds, generally for 40 to 80 seconds.

As a result of this step, an electrode composite mixture can be formed which contains the fibrillated first binder, the materials associated with the non-fibrillatable particles such as the other binder and/or conductive additive, and the active material particles. When formed into a sheet (or a film) by a calendaring process or a pressing process, this electrode composite mixture can be easily formed into a sheet or can be processed by a dry process owing to the first binder's function of retaining the active material particles.

### Step of Manufacturing Electrode Sheet

The disclosed manufacturing method may further comprise a step of forming the electrode composite mixture into a sheet (a film) to manufacture the electrode sheet 2 (S30). The resulting electrode sheet 2 is manufactured to have a thickness that, for example, finally provides the positive electrode 14 or the negative electrode 16 with a thickness of 10 µm or more and 500 µm or less, although this need not always be the case. The thickness of the electrode sheet 2 is 100 µm or more and 2000 µm or less, or 100 µm or more and 1000 µm or less, although it is not particularly limited thereto. The step of forming the electrode composite mixture into a sheet can include, for example, a calendaring process in which the electrode composite mixture is fed between rotating rollers and subjected to heat rolling there to be formed into a sheet, without using a support. Alternatively, the step of forming the electrode composite mixture into a sheet can include a pressing process in which the electrode composite mixture is supplied into a suitable mold and pressed under heat.

Since the fibrillated first binder retains the active material particles, other binder, and conductive additive in the resulting electrode sheet 2, the electrode sheet 2 can be a freestanding electrode sheet that can support itself without any additional support.

The disclosed manufacturing method can further comprise a step of manufacturing the secondary battery 10 comprising the positive electrode 14, the negative electrode 16, and the separator 12, by using the electrode sheet 2. Thereby, the secondary battery 10 comprising the positive electrode 14 can be manufactured with hardly any damage to the active material particles and resulting in zero to hardly any loss in electrode properties. In case the electrode sheet 2 is a negative electrode sheet, the secondary battery 10 comprising the negative electrode 16 can be manufactured with zero to hardly any loss in the electrode properties.

The step of preparing the binder mixture and the step of preparing the electrode composite mixture in the disclosed manufacturing method described above can each be performed as a dry process without using any solvent as a dispersion medium for electrode components such as the binder(s) and the active material particles. The dry process is advantageous from a perspective of manufacturing efficiency of the electrode sheet 2. However, it is to be understood that the disclosed manufacturing method does not exclude usage of solvents in the above steps. For example, a small amount of solvent may be used to the extent that the advantage of the dry process is not impaired.

While a method of manufacturing an electrode sheet has been described above, the disclosure herein also provides a method of manufacturing an electrode binder mixture comprising a step of preparing the binder mixture. Further, the disclosure herein also provides a method of manufacturing an electrode composite mixture comprising a step of preparing a binder mixture and a step of preparing the electrode composite mixture. Moreover, the disclosure herein also provides a method of manufacturing an electrode comprising a step of preparing a binder mixture, a step of preparing an electrode composite mixture, a step of manufacturing an electrode sheet using the electrode composite mixture, and a step of manufacturing a secondary battery comprising the electrode sheet as at least one electrode. Various aspects of the steps and elements described in connection with the disclosed manufacturing method can be applied to the steps and elements of the above manufacturing methods.

It is clear that the disclosure herein includes the configurations below.
[1] A method for manufacturing an electrode sheet, comprising preparing a binder mixture containing a fibrillated first binder by mixing a fibrillatable first binder and inactive material particles which are non-fibrillatable particles; and preparing an electrode composite mixture containing the binder mixture and active material particles.
[2] The method according to [1], wherein the preparing the binder mixture is performed at a temperature equal to or lower than a melting point of a material contained in the non-fibrillatable particles.
[3] The method according to [1] or [2], wherein the active material particles each comprise a core containing an active material and a coating layer covering at least a portion of the core.
[4] The method according to [3], wherein the coating layer has electron conductivity.
[5] The method according to any one of [1] to [4], wherein the non-fibrillatable particles include a component of the electrode sheet.
[6] The method according to any one of [1] to [5], wherein the non-fibrillatable particles include a second binder.
[7] The method according to any one of [1] to [6], wherein an average particle diameter (D₅₀) of the non-fibrillatable particles is 7µm or more.
[8] The method according to any one of [1] to [7], wherein the preparing the binder mixture includes mixing at a first work amount, and the preparing the electrode composite mixture includes mixing at a second work amount lower than the first work amount.
[9] The method according to any one of [1] to [8], wherein the preparing of the binder mixture and the preparing of the electrode composite mixture are each performed as a dry process.
[10] The method according to any one of [1] to [9], further comprising forming the electrode sheet using the electrode composite mixture.
[11] A method for manufacturing an electrode binder mixture, comprising mixing a fibrillatable first binder and inactive material particles which are non-fibrillatable particles to prepare a binder mixture containing a fibrillated first binder.
[12] A method for manufacturing an electrode composite mixture, comprising mixing a fibrillatable first binder and inactive material particles which are non-fibrillatable particles to prepare a binder mixture containing a fibrillated first binder; and preparing an electrode composite mixture containing the binder mixture and active material particles.
[13] A method for manufacturing a secondary battery, comprising mixing a fibrillatable first binder and inactive material particles which are non-fibrillatable particles to prepare a binder mixture containing a fibrillated first binder, preparing an electrode composite mixture containing the binder mixture and active material particles, manufacturing an electrode sheet using the electrode composite mixture, and manufacturing a secondary battery comprising the electrode sheet as at least one electrode.

### Embodiment

While an embodiment of the disclosure herein will be described hereinafter, the embodiment is merely illustrative and places no limitation on the scope of the patent claims.

### Manufacture of Electrode Sheet according to Embodiment

### (1) Preparation of Binder Mixture

As materials for a binder mixture, PTFE powder (average particle diameter (D₅₀: 25 µm)) was used as a fibrillatable binder and PVDF powder (average particle diameter (D₅₀: 15 µm)) was used as non-fibrillatable particles, wherein the mass ratio between these materials was 5:1. These materials were put into a kneader capable of shear mixing and were subjected to mixing (shear mixing) at a work amount (4.6 J per 100 g of the mixing materials) that allows the PTFE powder to be generally fibrillated, to prepare a binder mixture.

### (2) Preparation of Electrode Composite Mixture

A carbon-coated LFP (carbon coating thickness: 2 nm, carbon content (relative to LFP): 0.22 mass%, average particle diameter D₅₀: 7.3 µm) was used as an active material to prepare an electrode composite mixture. Six parts by mass of the binder mixture prepared in (1) and 94 parts by mass of the LFP were put into a mixer and mixed at a work amount (0.4 J per 100 g) that allows simple mixing of these materials, to prepare an electrode composite mixture.

### (3) Manufacture of Electrode Sheet

An electrode sheet of an embodiment was manufactured using the electrode composite mixture of the embodiment via a calendaring process.

### Preparation of Electrode Composite Mixture according to Comparative Example

In a comparative example, an electrode composite mixture of a comparative example was prepared by mixing the same PTFE powder, PVDF powder, and LFP as those used in the above embodiment as a fibrillatable binder, non-fibrillatable particles, and active material particles, respectively.

### (1) Preparation of Electrode Composite Mixture

One part by mass of the PVDF powder which was pulverized by jet pulverization in advance, five parts by mass of the PTFE powder, and 94 parts by mass of the LFP were put into the same kneader as the one used in the embodiment, and were subjected to mixing (shear mixing) at a work amount of 0.4 J per 100g of the mixing materials, to prepare an electrode composite mixture of a comparative example.

### (2) Manufacture of Electrode Sheet

An electrode sheet of a comparative example was manufactured using the electrode composite mixture of the comparative example via a calendaring process.

### Evaluation

### (1) Self-Supportability of Electrode Sheets

The electrode sheet of the embodiment and the electrode sheet of the comparative example both maintained intended three-dimensional geometries by themselves.

### (2) Evaluation of Damage to LFP's Carbon Coatings by AES

Only LFPs were extracted from the electrode composite mixtures of the embodiment and comparative example, and the LFPs were subjected to surface analysis by AES (Auger electron spectroscopy). For the LFP in the electrode composite mixture of the embodiment, the result indicated that Auger electrons associated with carbon atoms originated from the carbon coatings were detected, while Auger electrons associated with Mn or Fe originated from core particle were hardly observed. In contrast, for the LFP in the electrode composite mixture of the comparative example, the result indicated that Auger electrons associated with carbon atoms could not be detected, while Auger electrons associated with Mn or Fe were detected.

These results show that in the electrode composite mixture of the embodiment, the carbon coatings of the LFP were undamaged and remained on the LFP, while most of the carbon coatings of the LFP were removed in the shear mixing that fibrillates the PTFE.

### (3) Evaluation of Powder Resistivity

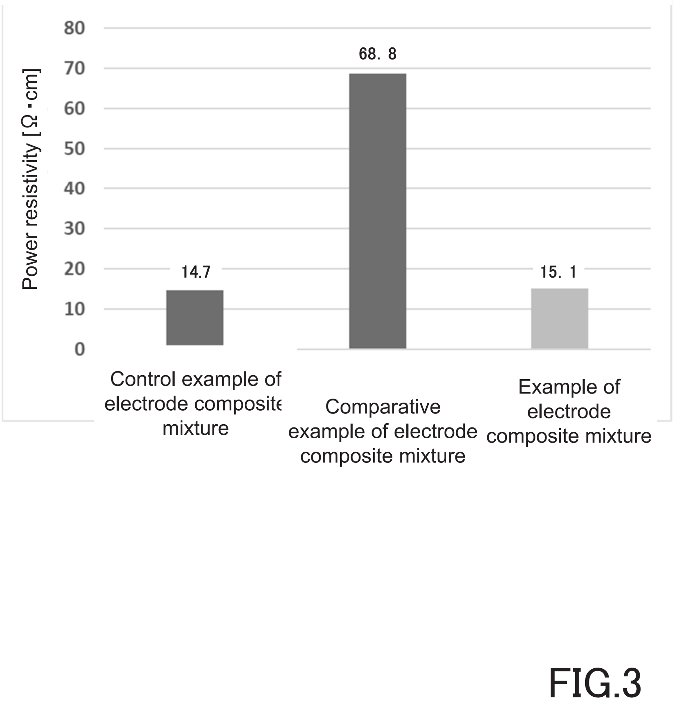

Test pieces were made by pressing the electrode composite mixtures of the embodiment and comparative example at density of 2.0 g/cm³, and electrical resistance of each test piece was measured. The result is illustrated in FIG. 3. As illustrated in FIG. 3, the electrical resistance was 15.1 Ω·cm for the electrode composite mixture of the embodiment, while the electrical resistance was 68.8 Ω·cm for the electrode composite mixture of the comparative example. In a control example, 1 part by mass of PVDF powder, five parts by mass of PTFE powder, and 94 parts by mass of LFP were mixed together in the same mixer as the one used to prepare the electrode composite mixture of the embodiment at a work amount (0.4 J per 100 g of the mixing materials) that allows simple mixing of these materials to prepare an electrode composite mixture, and the electric resistance was measured in the same way as above for this electrode composite mixture. The result was 14.7 Ω·cm.

Since the resistance value for the electrode composite mixture of the embodiment was comparable with the resistance value for the electrode composite mixture of the control example, it was found that the carbon coatings on the LFP sufficiently function in the electrode composite mixture of the embodiment. In contrast, since the resistance value for the electrode composite mixture of the comparative example was significantly large, it was found that the carbon coatings on the LFP were removed and did not function as they are supposed to function.

As described above, it was found that subjecting a fibrillatable binder to shear mixing in the presence of non-fibrillatable particles, which are inactive material particles, allows the binder to be sufficiently fibrillated, thereby manufacturing a dry freestanding electrode. Thus, it was found that fibrillating a fibrillatable binder in the absence of active material particles is useful to reduce or avoid damage to active material particles and to allow the active material particles to perform their function.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A method for manufacturing an electrode sheet (2), the method comprising:
preparing a binder mixture containing a fibrillated first binder by mixing a fibrillatable first binder and inactive material particles which are non-fibrillatable particles; and
preparing an electrode composite mixture containing the binder mixture and active material particles.

2. The method according to Claim 1, wherein the preparing the binder mixture is performed at a temperature equal to or lower than a melting point of a material contained in the non-fibrillatable particles.

3. The method according to Claim 1, wherein the active material particles each comprise a core containing an active material and a coating layer covering at least a portion of the core.

4. The method according to Claim 3, wherein the coating layer has electron conductivity.

5. The method according to Claim 1, wherein the non-fibrillatable particles include a component of the electrode sheet.

6. The method according to Claim 1, wherein the non-fibrillatable particles include a second binder.

7. The method according to Claim 1, wherein an average particle diameter (D₅₀) of the non-fibrillatable particles is 7µm or more.

8. The method according to Claim 1, wherein
the preparing the binder mixture includes mixing at a first work amount, and
the preparing the electrode composite mixture includes mixing at a second work amount lower than the first work amount.

9. The method according to Claim 1, wherein the preparing of the binder mixture and the preparing of the electrode composite mixture are each performed as a dry process.

10. The method according to any one of Claims 1 to 9, further comprising forming the electrode sheet 2 using the electrode composite mixture.

11. A method for manufacturing an electrode binder mixture, the method comprising:
mixing a fibrillatable first binder and inactive material particles which are non-fibrillatable particles to prepare a binder mixture containing a fibrillated first binder.

12. A method for manufacturing an electrode composite mixture, the method comprising:
mixing a fibrillatable first binder and inactive material particles which are non-fibrillatable particles to prepare a binder mixture containing a fibrillated first binder; and
preparing an electrode composite mixture containing the binder mixture and active material particles.
